# EUROPÄISCHE PATENTSCHRIFT

(11) **EP 0 677 914 B1**
(45) Veröffentlichungstag und Bekanntmachung des Hinweises auf die Patenterteilung: **10.06.1998**
(21) Anmeldenummer: 95105161.4
(22) Anmeldetag: 06.04.1995
(51) Int. Cl.: H02K 21/00, H02K 41/03

(54) **Transversalflussmaschine**
Machine with transverse flux
Machine à flux transversal

(30) Priorität: 15.04.1994 DE 4413219
(43) Veröffentlichungstag der Anmeldung: 18.10.1995
(73) Patentinhaber: Weh, Herbert, Prof. Dr., D-38116 Braunschweig (DE)
(72) Erfinder: Weh, Herbert, Prof. Dr., D-38116 Braunschweig (DE)
(74) Vertreter: Einsel, Martin, Dipl.-Phys.

(56) Entgegenhaltungen:
- EP-A- 0 352 189
- EP-A- 0 514 176
- DE-A- 3 927 453

## Beschreibung

Die Erfindung betrifft eine Transversalflußmaschine mit einem Stator und einem Läufer und magnetischen Kreisen, deren Fluß im wesentlichen quer zur Bewegungsrichtung des Läufers verläuft, wobei der Stator gleichartige Polelemente aufweist, die in gleicher Teilung im Gehäuse der Maschine angeordnet sind. Die Polelemente weisen zwei im Abstand voneinander liegende äußere Polschenkel, die von einem die äußeren Polschenkel verbindenden Steg ausgehen und einen zwischen diesen Schenkeln liegenden Schenkel auf. Der Stator weist wenigstens eine zweisträngige ringförmige Wicklung auf, deren Wicklungsstränge zwischen den äußeren Polschenkeln der Polelemente gegen den Steg anliegend angeordnet sind. Der Läufer ist mit wenigstens zwei quer zur Bewegungsrichtung in Abstand übereinander liegenden Erregerteilen versehen mit in Bewegungsrichtung im Abstand voneinander angeordneten und in Bewegungsrichtung in ihrer Flußrichtung altemierenden Permanentmagneten sowie zwischen den Permanentmageten angeordneten Weicheisenelementen mit einer der Teilung der Polelemente entsprechenden Teilung und der Breite der Schenkel der Polelemente entsprechenden Breite.

Transversalflußmaschinen dieser Art können als Motor mit rotierendem Läufer, aber auch als Linearantrieb mit ebenem Stator und Läufer ausgebildet sein.

Transversalflußmaschinen der genannten Art sind aus der deutschen Patentschrift DE 41 38 014 C1 bekannt. Bei dieser bekannten Transversalflußmaschine sind E-förmige Polelemente in ebener Form vorgesehen, die fertigungstechnisch einfach herstellbar sind. Solche Polelemente lassen sich z.B. aus gestanzten Blechen in ebener Form herstellen, die verklebt werden. Die Polelemente können aber auch aus Eisenpulverpartikeln mit entsprechenden Bindemitteln oder in gesinterter Form in ebenen Formen gepreßt werden. Die Erregerteile sind ringförmig ausgebildet und ein- oder beidseitig an einer Rotorscheibe befestigt. Bei dieser bekannten Transversalflußmaschine sind die Magnete und die Weicheisenelemente relativ zur Bewegungsrichtung schräg angeordnet. Dies führt geometriebedingt für den magnetischen Fluß zu ungünstigen Bedingungen und insbesondere auch einen zu erhöhten Platzbedarf in Bewegungsrichtung, wenn gleiche magnetische Leitfähigkeit im Weicheisenbereich vorausgesetzt ausgesetzt wird. Darüber hinaus ist im luftspaltnahen Bereich ein für die Magnetisierung durch die Permanentmagnete verlorener Raum zu berücksichtigen. Bei der Schräganordnung der Magnete und der Weicheisenelemente ist femer eine verhältnismäßig große Höhe der Läuferanordnung zwischen den Polen der Polelemente erforderlich. Dies führt bei rotierenden Maschinen zu einer Verringerung des für die Drehmomentbildung wirksamen mittleren Durchmessers, wenn von fest vorgegebenen Außenabmessungen ausgegangen wird.

Aufgabe der Erfindung ist es, die Wirksamkeit der Erregerteile zu verbessem und gleichzeitig eine vereinfachte Fertigung zu erreichen.

Zu diesem Zweck ist erfindungsgemäß vorgesehen, daß die zwischen den äußeren Polschenkeln der Polelemente liegenden Polelemente gegen die äußeren Polschenkel um eine halbe Polteilung versetzt angeordnet sind und die Permanentmagnete im wesentlichen quaderförmig ausgebildet und mit ihrer Flußrichtung senkrecht zu den Ebenen der an die Erregerteile angrenzenden Polflächen der Polelemente liegen.

Der Versatz der mit ihren Polflächen gegenüberliegenden Polschenkel kann dadurch erreicht werden, daß die Polelemente E-förmig ausgebildet sind und mindestens jeweils ein Polschenkel der E-förmigen Polelemente mit den anderen Polschenkeln altemierend quer zur Bewegungsrichtung des Läufers symmetrisch geteilt und relativ zu den ungeteilten Polschenkeln so abgekröpft ist, daß sich die Außenseiten der abgekröpften Polschenkel der Polelemente jeweils mit den Außenseiten der abgekröpften Polschenkel der benachbarten Polelemente berühren.

Vorzugsweise ist dabei der mittlere Polschenkel in Achsrichtung geteilt. Wenn der mittlere Polschenkel dabei im wesentlichen die gleiche Höhe senkrecht zur Bewegungsrichtung des Läufers hat wie die beiden äußeren Polschenkel, ist eine viersträngige Ausbildung der Maschine möglich.

Bei einer zweisträngigen Wicklung, bei der die in die Polelemente eingelegten beiden Wicklungen auf einer Seite parallelgeschaltet sind, kann der mittlere Polschenkel eine radiale Höhe haben, die etwa dem acht- bis zwölffachen des Luftspaltes entspricht. Hierdurch vergrößert sich bei vorgegebenem Außendurchmesser einer rotierenden Maschine dann entsprechend der für die Drehmomentbildung wirksame Maschinendurchmesser.

Bei zweisträngiger Wicklung kann der mittlere Schenkel auch vom übrigen Polelement magnetisch getrennt ausgebildet und in einem Ring aus nichtmagnetischem Material angeordnet sein, der mit Befestigungsansätzen versehen ist, die zwischen den Polshenkeln liegen. Auch hier genügt für den mittleren Polshenkel bei einer rotierenden Maschine eine radiale Höhe, die etwa dem acht- bis zwölffachen des Luftspaltes entspricht.

Durch eine solche Trennung des mittleren Polschenkels und Anordnung in diesem Ring aus nichtmagnetischem Material axial im Abstand von der dem Läufer zugewandten Innenseite des Steges der Polelemente kann auf jeder Seite eine einzige Wicklung vorgesehen werden, die sich über die Höhe des Steges zwischen den äußeren Polschenkeln erstreckt. Es wird somit Raum für einen vergrößerten Wicklungsquerschnitt gewonnen und der Streuungsanteil der Wicklung verringert, ohne damit den für die Drehmomentbildung wirksamen Maschinendurchmesser zu verkleinem.

### Figurenbeschreibung

Die Erfindung ist in der Zeichnung in Ausführungsbeispielen dargestellt und im nachstehenden im einzelnen anhand der Zeichnung beschrieben.
Es zeigt:
- Figur 1: eine Transversalflußmaschine, ausgebildet als Motor mit rotierendem Läufer in Verbindung mit den Mitteln für die gesteuerte Stromversorgung
- Figur 2: ein Polelement mit Wicklung und den Erregerteilen in einer ersten Ausführungsform
- Figur 3: einen Schnitt längs der Linie B-B in Fig.2
- Figur4: einen Schnitt längs der Linie A-A in Fig.2
- Figur 5: ein Polelement in einer weiteren Ausführungsform
- Figur 6: einen Schnitt längs der Linie C-C in Fig.5
- Figur 7: eine weitere Ausführungsform in einer Darstellung entsprechend Fig.2

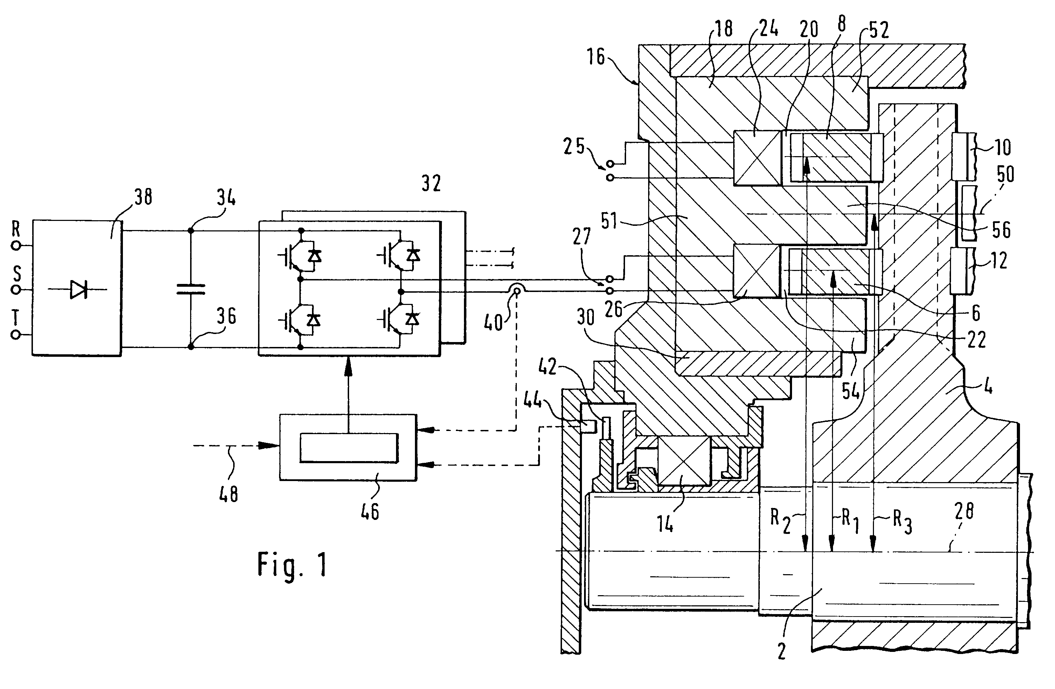

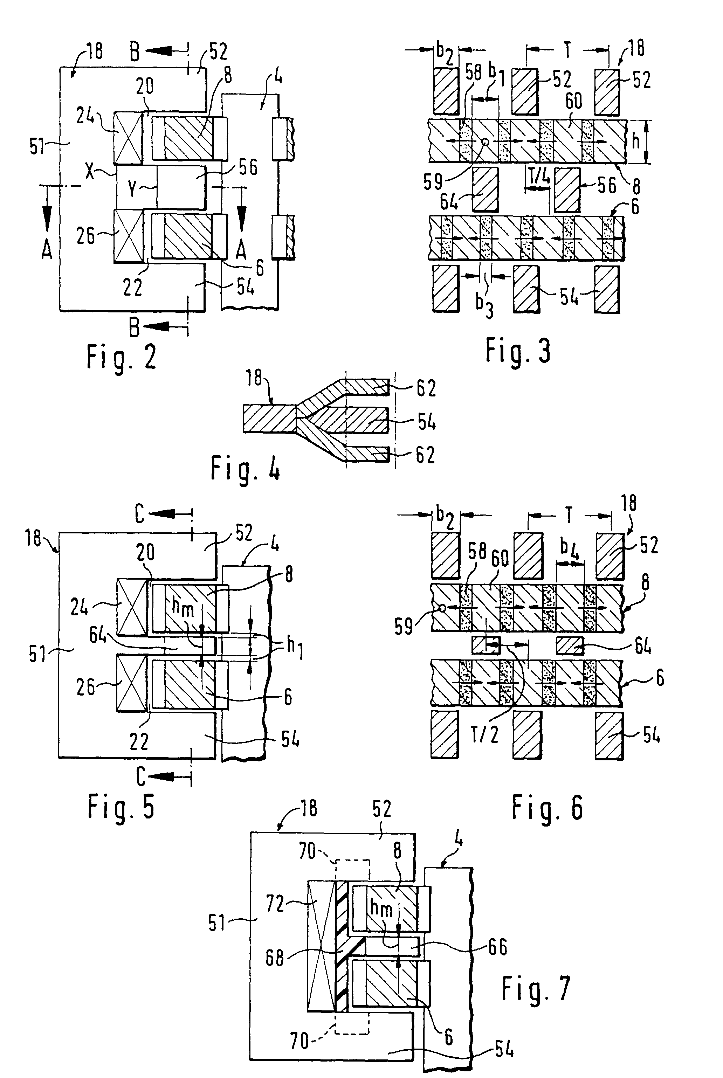

Die in Fig.1 dargestellte rotierende Transversalflußmaschine trägt auf einer Welle 2 eine Rotorscheibe 4, an der mit mittleren Radien R₁, R₂ jeweils ringförmige Erregerteile mit Permanentmagneten in Sammleranordnung befestigt sind, die radial und in Umfangsrichtung fest mit dem Rotor verbunden sind. Die Erregerteile greifen in Vertiefungen an den Seiten des Motors ein und sind damit radial formschlüssig gehalten. In axialer Richtung und in Umfangsrichtung sind die Bewegungsteile durch axiale Zugbolzen 59 gehalten, die wie in Fig. 3 und 6 angedeutet mittig durch die Weicheisenelemente der Erregerteile und die Rotorscheibe geführt sind. Die Welle 2 ist über Lager 14 in dem Gehäuse 16 drehbar gelagert.

In dem Gehäuse 16 sind Polelemente 18 angeordnet, mit Nuten 20,22, auf deren Grund jeweils eine Ringwicklung 24,26 koaxial zur Achse 28 der Welle 2 angeordnet ist. Die Wicklungen haben außen am Gehäuse Abschlüsse 25 bzw. 27. Die Polelemente 18 sind in einen Befestigungsring 30 eingesetzt, der im Gehäuse 16 festgelegt ist.

Die Wicklungen 24 und 26 und die auf der gegenüberliegenden Seite des Rotors angeordneten, hier nicht dargestellten Wicklungen werden von einem gesteuerten Wechselrichter 32 mit Strom versorgt, der einen Gleichspannungseingang 34,36 hat. Für jeden Wicklungsstrang der Maschine ist ein Wechselrichter vorgesehen. Die Gleichspannung wird vorzugsweise in einem Gleichrichter 38 erzeugt, der über seine Eingänge R,S,T an ein Drehstromnetz angeschlossen sein kann.

In einer der Zuleitungen zu den Wicklungen ist ein Stromwandler 40 zur Messung des in der angeschlossenen Wicklung fließenden Stromes eingeschaltet. Am Motor selbst ist weiter ein Drehstellungssensor mit einem auf der Welle befestigten Geber 42 und einem Sensorelement 44 am Gehäuse angeordnet.

Der Wechselrichter 32 wird von einer Steuereinheit 46 gesteuert, in die der gemessene Strom und die Rotorstellung als Ist-Werte eingegeben werden. Der Steuereinheit werden die gewünschten Betriebsparameter als Steuerbefehle eingegeben, wie durch den Pfeil 48 angedeutet.

Der für die Drehmomentenbildung wirksame Maschinendurchmesser ergibt sich aus den mittleren Radien R₁ und R₂ der beiden Erregerteile 6 und 8. Er liegt beispielsweise auf dem mittleren Radius R₃.

Die Teilwicklungen werden mit um 90° phasenverschobenen Wechselströmen gespeist. Entsprechend sind die Erregerteile 6,8,10,12 um eine halbe Polteilung entsprechend 90° in Umfangsrichtung versetzt.

Die in Fig. 2 dargestellten Polelemente 18 entsprechen den Polelementen 18 wie sie in

Fig.1 dargestellt sind. Die Polelemente haben einen Steg 51, äußere Schenkel 52, 54 und einem mittleren Schenkel 56. Alle drei Schenkel haben im wesentlichen die gleiche Höhe. Wie aus Fig.3 ersichtlich ist der mittlere Schenkel 56 der Polelemente 18 um eine halbe Teilung T/2 der Polelemente gegenüber den äußeren Schenkeln 52, 54 versetzt. Die Erregerteile 6 und 8, die in bekannter Weise nach dem Sammlerprinzip (flux concentration mode) ausgebildet sind, haben senkrecht zur Bewegungsrichtung angeordnete Permanentmagnete 58, die mit ihrer durch die Pfeile dargestellten Flußrichtung altemierend angeordnet sind. Dazwischen liegen die den Fluß lenkenden Weicheisenelemente 60. In Fig. 3 ist einer der Zugbolzen 59 dargestellt. Die Polelemente 18 und die Erregerteile sind in Fig. 3 ebenso wie in Fig. 6 zur besseren Übersichtlichkeit eben dargestellt. Diese Anordnung entspricht daneben der Anordnung wie sie bei einem Linearantrieb vorliegt.

In Fig.3 sind die beiden Erregerteile 6 und 8 um eine Teilung T/4 versetzt gegeneinander angeordnet, worauf weiter unten noch eingegangen wird. Durch die radiale Anordnung der Magnete können die Erregerteile mit einer geringeren Höhe h ausgebildet sein als bei der bekannten Ausführung mit schräg angeordneten Magneten und daran angepaßten Weicheisenteilen. Die Magnete 58 sind im wesentlichen quaderförmig. Die Weicheisenelemente 60 entsprechen in ihrer Breite b₁ in Bewegungsrichtung im wesentlichen der Breite b2 der Schenkel 52,54,56 der Polelemente 18. Die Teilung T ergibt sich damit aus der Breite der zwei Weicheisenelemente zuzüglich der Breite b₃ von zwei Permanentmagneten 58.

Der Versatz der mittleren Schenkel 56 der Polelemente 18 kann dadurch erzielt werden, daß wie in Fig.4 dargestellt, der mittlere Schenkel symmetrisch geteilt und die beiden Hälften des Schenkels so abgekröpft werden, daß die zwischen den Erregerteilen liegenden Abschnitte 62 der mittleren Schenkel benachbarter Polelemente sich jeweils mit ihren Außenseiten berühren, so, daß jeweils zwei Teilschenkel benachbarter Polelemente den mittleren Polschenkel 56 bilden. Die Berührungsfläche 63 ist aus Fig.3 ersichtlich.

Die entgegengesetzt gerichteten beiden Kröpfungslinien X,Y jedes Schenkelteiles 62 liegen bei der dargestellten Ausführungsform einmal im Bereich des Erregerteils und zum anderen am Übergang zu den Stegen 51. Die letztgenannte Kröpfung kann aber auch teilweise in den Steg selbst gelegt werden. Statt des mittleren Schenkels können auch die äußeren Schenkel 52,54 in der beschriebenen Weise abgekröpft und um eine halbe Teilung gegen den Steg versetzt werden.

Für die Fertigung der Polelemente mit wenigstens einem durch Kröpfung gespreizten Schenkel können eben gestanzte Bleche durch eine weitere Stanzung gekröpft werden. Die gekröpften Bleche werden dann geklebt.

Durch den Versatz der beiden Erregerteile 6 und 8 um eine halbe Teilung können bei einer zweisträngigen Ausführungsform die beiden Wicklungen 24 und 26 parallel geschaltet werden, ebenso die beiden gegenüber liegenden, in der Zeichnung nicht dargestellten Wicklungen, die dann entsprechend um 90° versetzt von dem Wechselrichter gespeist werden. In dieser Schaltung wird die Maschine als zweisträngige Maschine betrieben.

Bei zweisträngigem Betrieb der Maschine mit phasengleich gespeisten Wicklungen 24, 26 und Versatz der Erregerteile um eine Teilung kann, wie in Fig. 5 und 6 dargestellt, die Höhe hₘ des mittleren Schenkels 64 reduziert werden, und zwar soweit wie es die kraftbildende Funktion durch die Wechselwirkung mit den Permanentmagneten erlaubt. Eine solche Reduktion ist möglich, weil bei zweisträngigem Betrieb und Versatz der Erregerteile um eine Teilung der mittlere Schenkel 64 praktisch nur in radialer Richtung vom Magnetfeld durchsetzt wird. Die Mindesthöhe ergibt sich daraus, daß ein "Felddurchgriff" zwischen den Erregerteilen 6 und 8 weitgehend vermieden werden muß. Dies kann durch die Wahl der Mindesthöhe hₘ in der Größe des etwa acht- bis zwölffachen der Höhe h₁ des Luftspaltes erreicht werden.

Durch die geringere Höhe des mittleren Schenkels ergibt sich insbesondere bei Maschinen mit kleinem und mittlerem Durchmesser, die Möglichkeit den Radius R₃ und damit den wirksamen Maschinendurchmesser bei gegebenem Außendurchmesser des Gehäuses und damit das Drehmoment zu vergrößem.

Bei zweisträngiger Ausführung mit phasengleich gespeisten Ringwicklungen 24,26 kann auch auf eine magnetisch leitende Verbindung des durch den mittleren Schenkel gebildeten Polelementes mit den übrigen Polelementen verzichtet werden. Eine entsprechende Ausführung ist in Fig.7 dargestellt. Hier ist das mittlere Polelement 66 vom Polelement 18 getrennt. Die magnetisch leitend ausgebildeten Polelemente 66 sind in einem Ring 68 aus einem magnetisch nicht leitenden Material gehaltert, der mit Befestigungsansätzen 70 versehen ist, die sich zwischen die äußeren Polschenkel erstrecken und jeweils mit den Außenseiten der äußeren Polschenkel verbunden oder aber an dem Befestigungsring 30 für die Polschenkel 18 befestigt sein können.

Durch eine Ausbildung nach Fig.7 wird ein ungeteilter Nutraum 72 erreicht, der sich über die gesamte Höhe des Steges zwischen dem inneren und äußeren Polschenkel erstreckt. Dieser durchgehende Nutraum kann für die Unterbringung eines vergrößerten Wicklungsquerschnittes genutzt werden und dessen Streuungsanteil verringern. Der Nutraum kann aber auch in radialer Richtung flacher gehalten werden, wodurch wiederum der mittlere Rotordurchmesser vergrößert werden kann.

## Patentansprüche

1. Transversalflußmaschine mit einem Stator und einem Läufer und magnetischen Kreisen, deren Fluß im wesentlichen quer zur Bewegungsrichtung des Läufers verläuft, wobei
der Stator gleichartige Polelemente (12) aufweist, die in gleicher Teilung im Gehäuse (16) der Maschine angeordnet sind, die Polelemente zwei im Abstand voneinander liegende äußere Polschenkel (52,54), die von einem die äußeren Polschenkel verbindenden Steg (51) ausgehen, und einen zwischen diesen Schenkeln liegenden Schenkel (56) aufweisen,
der Stator wenigstens eine zweisträngige ringförmige Wicklung aufweist, deren Wicklungsstränge (24,26) zwischen den äußeren Polschenkeln (52,54) der Polelemente (18) gegen deren Steg (51) anliegend angeordnet sind,
der Läufer wenigstens zwei quer zur Bewegungsrichtung in Abstand übereinander liegende Erregerteile (8,6) aufweist, die mit in Bewegungsrichtung im Abstand voneinander angeordnete und in Bewegungsrichtung in ihrer Flußrichtung alternierenden Permanentmagneten (58) sowie zwischen den Permanentmagneten angeordneten Weicheisenelemente (60) mit einer der Teilung der Polelemente entsprechenden Teilung und der Breite (b₂) der Schenkel der Polelemente entsprechenden Breite (b₄) versehen sind, **dadurch gekennzeichnet,**
daß die zwischen den äußeren Polschenkeln (52,54) der Polelemente (18) liegenden Polelemente (56,64,66) gegen die äußeren Polschenkel (52,54) um eine halbe Polteilung versetzt angeordnet sind und die Permanentmagnete (58) im wesentlichen quaderförmig ausgebildet und mit ihrer Flußrichtung senkrecht zu den Ebenen der an die Erregerteile (6,8) angrenzenden Polflächen der Polelemente liegen.

2. Transversalflußmaschine nach Anspruch 1, **dadurch gekennzeichnet**,
daß die Polelemente (18) E-förmig ausgebildet sind und mindestens jeweils ein Polschenkel (56,64) der E-förmigen Polelemente mit den anderen Polschenkeln (52,54) altemierend quer zur Bewegungsrichtung des Läufers symmetrisch geteilt und relativ zu den ungeteilten Polschenkeln (52,54) so abgekröpft ist, daß sich die Außenseiten der abgekröpften Polschenkelteile (62,64) der Polelemente jeweils mit den Außenseiten der abgekröpften Polschenkelteile der benachbarten Polelemente berühren.

3. Transversalflußmaschine nach Anspruch 2, **dadurch gekennzeichnet**, daß der mittlere Polschenkel in Achsrichtung geteilt ist.

4. Transversalflußmaschine nach Anspruch 2, **dadurch gekennzeichnet**, daß der mittlere Polschenkel (56;64) im wesentlichen die gleiche Höhe senkrecht zur Bewegungsrichtung des Läufers hat wie die beiden äußeren Polschenkel.

5. Transversalflußmaschine nach Anspruch 1, **dadurch gekennzeichnet**, daß bei einer zweisträngigen Wicklung der mittlere Polschenkel (64) eine Höhe senkrecht zur Bewegungsrichtung des Läufers hat, die etwa dem acht- bis zwölffachen der Höhe (h₁) des Luftspaltes entspricht.

6. Transversalflußmaschine nach Anspruch 1, **dadurch gekennzeichnet**, daß bei zweisträngiger Wicklung das mittlere Polelement (66) vom übrigen Polelement (18) magnetisch getrennt ausgebildet und in einem Ring (68) aus nicht magnetischem Material angeordnet ist, der mit Befestigungsansätzen (70) versehen ist, die zwischen den Polelementen (18) liegen.

7. Transversalflußmaschine nach Anspruch 6, **dadurch gekennzeichnet**, daß der Ring (68) axial mit Abstand von der dem Läufer zugewandten Innenseite des Steges (51) der Polelemente (18) liegt und daß eine einzige Wicklung (72) vorgesehen ist, die sich über die Höhe des Steges zwischen den äußeren Polschenkeln (52,54) erstreckt.

8. Transversalflußmaschine nach Anspruch 1, **dadurch gekennzeichnet**, daß sie als Motor mit rotierendem Läufer ausgebildet ist.

9. Transversalflußmaschine nach Anspruch 1, **dadurch gekennzeichnet**, daß sie als Linearantrieb mit ebenem Stator und Läufer ausgebildet ist.

## Claims

1. A transverse flux machine with a stator and a moving member and with magnetic circuits in which the flux passes substantially transversely of the direction of movement of the moving member, wherein
the stator has pole elements (12) of the same type, arranged at an equal spacing in the housing (16) of the machine, the pole elements having two spaced outer pole limbs (52, 54), extending from a bar (51) which joins the outer limbs, and a limb (56) located therebetween,
the stator has at least one annular winding with two phases (24, 26) which are arranged between the outer pole limbs (52, 54) of the pole elements (18), lying against the bar (51) thereof, and
the moving member has at least two exciting members (8, 6) which are superimposed at a spacing and lie transversely of the direction of movement, and which are provided with permanent magnets (58) spaced from each other in the direction of movement and alternating in their direction of flux in the direction of movement and, arranged between the permanent magnets, soft iron elements (60) at a spacing corresponding to that of the pole elements and of a width (b4) corresponding to the width (b2) of the limbs of the pole elements,
characterised in that
the pole elements (56, 64, 66) located between the outer limbs (52, 54) of the pole elements (18) are arranged offset by half a pole spacing relative to the outer limbs (52, 54), and the permanent magnets (58) are substantially cuboidal and lie with their direction of flux perpendicular to the planes of the faces of the pole elements adjoining the exciting members (6, 8).

2. A transverse flux machine according to claim 1, characterised in that the pole elements (18) are E-shaped, and at least one limb (56, 64) of each E-shaped element is divided symmetrically transversely of the direction of movement of the moving member alternately with the other limbs (52, 54), and is offset relative to the non-divided pole limbs (52, 54), so that the external sides of the offset limb sections (62, 64) of the pole elements in each case touch the external sides of the offset limb sections of the adjacent pole elements.

3. A transverse flux machine according to claim 2, characterised in that the central pole limb is divided in an axial direction.

4. A transverse flux machine according to claim 2, characterised in that the central pole limb (56; 64) has substantially the same height perpendicular to the direction of movement of the moving member as the two outer pole limbs.

5. A transverse flux machine according to claim 1, characterised in that in the case of a two-phase winding the central pole limb (64) has a height perpendicular to the direction of movement of the moving member corresponding to approximately eight to twelve times the height (h₁ of the air gap.

6. A transverse flux machine according to claim 1, characterised in that in the case of a two-phase winding the central pole element (66) is magnetically separated from the remainder of the pole element (18) and is arranged in a ring (68) of non-magnetic material provided with fastening attachments (70) located between the pole elements (18).

7. A transverse flux machine according to claim 6, characterised in that the ring (68) is axially spaced from the interior of the bar (51) of the pole elements (18) facing towards the moving member, and that a single winding (72) is provided, extending over the height of the bar between the outer pole limbs (52, 54).

8. A transverse flux machine according to claim 1, characterised in that it is constructed as a motor with a rotating moving member.

9. A transverse flux machine according to claim 1, characterised in that it is constructed as a linear drive with a flat stator and moving member.

## Revendications

1. Machine à flux transversal équipée d'un stator et d'un rotor et de circuits magnétiques, dont le flux circule sensiblement transversalement au sens de déplacement du rotor,
le stator présentant des éléments polaires (12) similaires, qui sont disposés avec une séparation identique dans le corps (16) de la machine, les éléments polaires présentant deux branches de pôle (52, 54) extérieures espacées l'une de l'autre, qui partent d'une barrette (51) reliant les branches de pôle extérieures, et une branche (56) située entre ces branches,
le stator présentant au moins un enroulement de forme annulaire à deux brins, dont les brins (24, 26) sont disposés entre les branches (52, 54) extérieures des éléments polaires (18) en s'appuyant contre leur barrette (51),
le rotor présentant au moins deux pièces excitatrices (8, 6) superposées à distance transversalement au sens de déplacement, lesquelles sont pourvues d'aimants permanents (58) espacés l'un de l'autre dans le sens de déplacement et alternants dans leur sens de flux dans le sens de déplacement et d'éléments en fer doux (60) disposés entre les aimants permanents avec une séparation correspondant à la séparation des éléments de pôle et une largeur (b₄) correspondant à la largeur (b₂) des branches des éléments polaires, caractérisée en ce que les éléments polaires (56, 64, 66), situés entre les branches de pôle extérieures (52, 54) des éléments polaires (18), sont disposés décalés d'une demi-séparation de pôle par rapport aux branches de pôle extérieures (52, 54) et les aimants permanents (58) sont conçus sensiblement en forme de parallélépipède et sont disposés avec leur sens de flux perpendiculairement aux plans des surfaces polaires, contiguës aux pièces excitatrices (6, 8), des éléments polaires.

2. Machine à flux transversal selon la revendication 1, caractérisée en ce que les éléments polaires (18) sont conçus avec la forme d'un E et qu'au moins respectivement une branche de pôle (56, 64) des éléments polaires en forme de E avec les autres branches de pôle (52, 54) est divisée de façon symétrique en alternance transversalement au sens de déplacement du rotor et est coudé par rapport aux branches de pôle (52, 54) non partagées de sorte que les côtés extérieurs des branches de pôle (62, 64) coudées des éléments polaires touchent respectivement les côtés extérieurs des branches de pôle coudées des éléments polaires voisins.

3. Machine à flux transversal selon la revendication 2, caractérisée en ce que la branche de pôle centrale est partagée dans le sens de l'axe.

4. Machine à flux transversal selon la revendication 2, caractérisée en ce que la branche de pôle (56 , 64) centrale a sensiblement la même hauteur, perpendiculairement au sens de déplacement du rotor, que les deux autres branches de pôle extérieures.

5. Machine à flux transversal selon la revendication 1, caractérisée en ce que, pour un enroulement à deux brins, la branche de pôle (64) centrale a une hauteur, perpendiculairement au sens de déplacement du rotor, qui correspond environ à huit à douze fois la hauteur (h₁) de l'entrefer.

6. Machine à flux transversal selon la revendication 1, caractérisée en ce que, pour un enroulement à deux brins, l'élément polaire (66) central est réalisé séparément du reste de l'élément polaire (18) au plan magnétique et est disposé dans une bague (68) à base de matériau non magnétique, qui est pourvue d'embases de fixation (70) qui sont situées entre les éléments polaires (18).

7. Machine à flux transversal selon la revendication 6, caractérisée en ce que la bague (68) est disposée axialement à distance du côté intérieur, tourné vers le rotor, de la barrette (51) des éléments polaires (18) et en ce qu'il est prévu un seul enroulement (72), qui s'étend sur la hauteur de la barrette entre les branches de pôle extérieures (52, 54).

8. Machine à flux transversal selon la revendication 1, caractérisée en ce qu'elle est conçue comme moteur avec rotor rotatif.

9. Machine à flux transversal selon la revendication 1, caractérisée en ce qu'elle est réalisée comme entraînement linaire avec stator plan et rotor.
